# EUROPÄISCHE PATENTSCHRIFT

(11) **EP 1 505 366 B1**
(45) Veröffentlichungstag und Bekanntmachung des Hinweises auf die Patenterteilung: **16.04.2008**
(21) Anmeldenummer: 04010414.3
(22) Anmeldetag: 03.05.2004
(51) Int. Cl.: G01B 11/00, G01B 21/04

(54) **Verfahren zur Einstellung einer Schaltschwelle eines Tastschalters**
Method for tuning a switching threshold of a switch sensor
Méthode pour régler le seuil de commutation d'un palpeur commutateur

(30) Priorität: 07.08.2003 DE 10336808
(43) Veröffentlichungstag der Anmeldung: 09.02.2005
(73) Patentinhaber: Dr. Johannes Heidenhain GmbH, 83292 Traunreut (DE)
(72) Erfinder: Gröll, Klaus, 83329 Waging am See (DE); Brandl, Sebastian, 83352 Altenmarkt (DE)

(56) Entgegenhaltungen:
- EP-A- 0 501 680
- EP-A- 0 501 681
- DE-A1- 19 929 557
- US-A- 4 177 568
- US-A- 5 526 576
- US-A- 5 862 604

## Beschreibung

Die Erfindung betrifft ein Verfahren zur Einstellung einer Schaltschwelle eines Tastschalters nach dem Oberbegriff des Anspruchs 1 sowie einen Tastschalter nach dem Oberbegriff des Anspruchs 10.

Ein derartiger Tastschalter (auch Tastsystem genannt) mit einem auslenkbaren Tastelement gibt bei einer Auslenkung des Tastelementes aus seiner Ruheposition ein Schaltsignal ab. Solche Tastschalter werden beispielsweise zur Positionsbestimmung von Werkstücken verwendet, die in materialbearbeitenden Maschinen, insbesondere Fräsmaschinen, eingespannt sind.

Unter der Ruheposition des Tastelementes wird eine Position des Tastelementes verstanden, in der dieses keinen Kontakt mit einem Werkstück hat und sich daher in einer durch den mechanischen Aufbau des Tastschalters definierten Gleichgewichtslage befindet. Bei Kontakt des Tastelementes mit dem Werkstück wird das Tastelement aus seiner Ruheposition (Gleichgewichtslage) heraus bewegt bzw. ausgelenkt.

Zur Bestimmung einer Auslenkung des Tastelementes aus seiner Ruheposition, die einen Kontakt des Tastelementes mit einem Werkstück anzeigt, wird ein (elektrischer) Systemparameter des Tastschalters gemessen, z.B. in Form einer elektrischen Spannung, die über im Tastschalter angeordneten Kontakten abfällt. Beim Auslenken des Tastelementes aus seiner Ruheposition bewirkt der Tastschalter eine Änderung des besagten Systemparameters, also beispielsweise der über den Kontakten abfallenden Spannung. Wenn der Systemparameter hierbei eine vorgegebene Schaltschwelle überschreitet, dann gibt der Tastschalter ein Schaltsignal ab, das eine Auslenkung des Tastelementes und damit den Kontakt mit einem Werkstück anzeigt.

Des Weiteren weist ein Tastschalter der eingangs genannten Art Mittel auf, mit denen die Differenz zwischen der Schaltschwelle und dem Wert des Systemparameters in der Ruheposition des Tastelementes auf einen vorgebbaren Differenzwert eingestellt werden kann. Dies ist deshalb notwendig, da aufgrund von Materialverschleiß sowie Einwirkung von Feuchtigkeit und Temperatur die Ruheposition des Tastelementes nicht vollständig konstant bleibt, sondern sich im Betrieb des Tastschalters sich mit der Zeit geringfügig ändert. Das heißt, die im Betrieb des Tastschalters tatsächlich eingenommene Ruheposition des Tastelementes weicht mit zunehmendem Alter des Tastschalters geringfügig von der idealen Ruheposition ab, der ein bestimmter Wert des Systemparameters (also beispielsweise der an den elektrischen Kontakten des Tastschalters abfallenden Spannung) zugeordnet ist. Dies führt dazu, dass der Systemparameter in der tatsächlichen Ruheposition des Tastelementes einen vom idealen Ruhewert abweichenden Wert aufweist. Dies kann wiederum zur Folge haben, dass eine Auslenkung des Tastelementes nicht korrekt erfasst wird oder ein nicht ausgelenktes Tastelement irrtümlich als ausgelenkt angesehen wird. Denn im Betrieb des Tastschalters wird der jeweils aktuell gemessene Wert des Systemparameters bezogen auf eine Schaltschwelle als Maß dafür angesehen, ob eine Auslenkung des Tastelementes vorliegt oder nicht. Verändert sich der Wert des Systemparameters in der Ruheposition des Tastelementes durch Materialverschleiß sowie die Einwirkung von Feuchtigkeit und Temperatur, so ändert sich insbesondere die Differenz zwischen der Schaltschwelle des Systemparameters und dessen Wert in der Ruheposition des Tastelementes; und diese Differenz bestimmt ja gerade die Auslöseschwelle, ab der der Tastschalter einen Kontakt des Tastelementes mit einem Werkstück durch Abgabe eines Schaltsignales anzeigt.

Es ist daher von Bedeutung, im Betrieb des Tastschalters die Differenz zwischen der Schaltschwelle des Systemparameters und dem Wert des Systemparameters in der Ruheposition (Ruhewert) möglichst konstant auf einem vorgegebenen Wert zu halten.

Aus der DE 109 29 557 A1 sind ein Verfahren und ein Schaltkreis zur Einstellung einer Schaltschwelle eines Tastschalters bekannt, bei dem die Schaltschwelle des Tastschalters auf einen von dem Wert des Systemparameters in der Ruheposition des Tastelementes abhängigen Wert eingestellt wird, um die Differenz zwischen der Schaltschwelle und dem Ruhewert des Systemparameters konstant zu halten. Hierfür ist es erforderlich, bei einer Anpassung (Nachführung) der Schaltschwelle jeweils sicherzustellen, dass sich das Tastelement tatsächlich in einer Ruheposition befindet.

Bei dem Tastschalter der EP 0 501 680 A1 wird die Schaltschwelle ebenfalls nachgeführt. Die Nachführung erfolgt nach zwei Methoden. Bei der ersten Methode erfolgt eine Nachführung immer nach erfolgter Antastung, das heißt, nach Generierung des Antastimpulses. Bei einem nicht korrekt in die Lagerung zurückkehrenden Kontaktes kann damit die Schaltschwelle fehlerhaft eingestellt werden. Nach der zweiten Methode erfolgt eine Nachführung nach Erkennung eines absinkenden Systemparameters. Damit soll eine nach der ersten Methode falsch eingestellte Schaltschwelle korrigiert werden. Es wird dabei davon ausgegangen, dass der nicht ordnungsgemäß in seine Lagerung zurückgekehrte Kontakt während des Betriebs sich in die Lagerung bewegt und damit den absinkenden Systemparameter generiert. Findet diese Bewegung nicht statt, bleibt die Schaltschwelle fehlerhaft.

Der Erfindung liegt das Problem zugrunde, ein Verfahren zur Einstellung der Schaltschwelle eines Tastschalters sowie einen Tastschalter der eingangs genannten Art weiter zu verbessern.

Dieses Problem wird erfindungsgemäß durch ein Verfahren mit den Merkmalen des Anspruchs 1 sowie durch einen Tastschalter mit den Merkmalen des Anspruchs 10 gelöst.

Danach wird zur Neueinstellung der Schaltschwelle die Differenz zwischen der Schaltschwelle und dem Ruhewert des Systemparameters ausschließlich entlang einer ersten Richtung des Zahlenstrahles der reellen Zahlen verändert, insbesondere derart, dass sich der Betrag der Differenz zwischen der Schaltschwelle und einem darunter liegenden Ruhewert des Systemparameters verringert nicht aber vergrößert. (D.h., es gibt keine Veränderung der Differenz in positiver Richtung des Zahlenstrahles hin zu größeren Beträgen der Differenz zwischen Schaltschwelle und Ruhewert des Systemparameters.) Hierzu ist die Steuereinrichtung des Tasters (z.B. in Form eines Mikroprozessors) derart eingerichtet (programmiert), dass sie zum Zweck der Neueinstellung der Schaltschwelle eine Änderung der Differenz zwischen der Schaltschwelle und dem Ruhewert des Systemparameters ausschließlich entlang der besagten ersten Richtung des Zahlenstrahles ermöglicht.

Die erfindungsgemäße Lösung beruht auf der Erkenntnis, dass sich der Ruhewert des Systemparameters im Betrieb eines Tastschalters als Folge von Verschleiß stets nur entlang einer Richtung ändert, beispielsweise im Betrieb kontinuierlich (geringfügig) abnimmt. Dies ist bedingt durch die Lagerung des Tastelementes im Gehäuse des Tastschalters mittels eines Kugellagers, dessen Verschleiß zu einer definierten Änderung der Lage des Tastelementes im Gehäuse des Tastschalters führt. Diese auf Verschleiß zurückgehende Änderung der Lage des Tastelementes in seiner Ruheposition (also im nicht ausgelenkten Zustand) führt wiederum zu einer definierten Veränderung des Ruhewertes des Systemparameters, also beispielsweise zu einer stetigen Abnahme des Wertes des Systemparameters in der Ruheposition des Tastelementes.

Eine kontinuierliche (geringfügige) Abnahme des unterhalb der Schaltschwelle liegenden Ruhewertes des Systemparameters hat wiederum zur Folge, dass der Betrag der Differenz zwischen der Schaltschwelle und dem Ruhewert des Systemparameters kontinuierlich (geringfügig) zunimmt. Um die Differenz zwischen der Schaltschwelle und dem Ruhewert des Systemparameters konstant auf einem vorgegebenen Differenzwert zu halten, muss daher diese Differenz regelmäßig etwas verringert werden. Dies kann einerseits durch eine Anpassung (also im vorliegenden Beispiel durch eine Absenkung) die Schaltschwelle des Systemparameters erfolgen oder alternativ durch eine Korrektur des Ruhewertes des Systemparameters, indem dem Systemparameter (und damit insbesondere auch dessen Ruhewert) ein Korrekturwert überlagert wird, so dass die Differenz aus der Schaltschwelle und dem (mit dem Korrekturwert beaufschlagten) Ruhewert dichter bei dem vorgegebenen Differenzwert liegt. Im vorliegenden Beispiel ist dies gleichbedeutend mit einer Anhebung des Ruhewertes des Systemparameters durch Addition eines Korrekturwertes (um die sich durch Verschleiß vergrößernde Differenz aus Schaltschwelle und Ruhewert des Systemparameters wieder auf den vorgegebenen Differenzwert einzustellen).

Die erfindungsgemäße Lösung hat den Vorteil, dass sie aufgrund der Berücksichtigung der Richtung der verschleißbedingten Änderung des Ruhewertes des Systemparameters (und damit auch der Differenz zwischen der Schaltschwelle und dem Ruhewert) eine einfache Unterscheidung zwischen einer Auslenkung des Tastelementes, die im vorliegenden Beispiel zu einem Anstieg des Wertes des Systemparameters führt, und einer verschleißbedingten Änderung der Ruheposition des Tastelementes, die zu einer Abnahme des Ruhewertes des Systemparameters führt, ermöglicht. Eine Korrektur der Differenz zwischen Schaltschwelle und Ruhewert des Systemparameters ist danach immer dann erforderlich, wenn der aktuell gemessene Wert des Systemparameters entlang einer Richtung von dem Soll-Ruhewert abweicht, die derjenigen Richtung entgegengesetzt ist, entlang derer sich der Systemparameter bei einer Auslenkung des Tastelementes verändert. Führt also bei dem verwendeten Tastschalter eine Auslenkung des Tastelementes zu einer Anhebung (Vergrößerung) des Wertes des Systemparameters, während die verschleißbedingte Änderung der Ruheposition des Tastelementes zu einer Abnahme (Verringerung) des Ruhewertes des Systemparameters führt, so kann eine solche verschleißbedingte Abnahme des Ruhewertes eindeutig daran erkannt werden, dass der Systemparameter einen Wert annimmt, der unterhalb des Soll-Ruhewertes des Systemparameters liegt. (Denn wenn eine Auslenkung stets zu einer Anhebung des Wertes des Systemparameters führt, dann kann ein Wert des Systemparameters, der unterhalb des Soll-Ruhewertes liegt, nur auf eine verschleißbedingte Änderung der Ruheposition des Tastelementes zurückzuführen sein.) Dementsprechend muss dann eine Korrektur der Differenz zwischen der Schaltschwelle und dem Ruhewert des Systemparameters vorgenommen werden, wobei der Betrag der Differenz zwischen Schaltschwelle und Ruhewert abnimmt, entsprechend der Änderung der Differenz zwischen Schaltschwelle und dem gemessenen Wert des Systemparameters am Beginn einer Auslenkung des Tastelementes aus seiner Ruhelage, d.h. vor dem Erreichen der Schaltschwelle.

Unter dem Soll-Ruhewert des Systemparameters wird vorliegend derjenige Wert des Systemparameters verstanden, den der Systemparameter in der Ruheposition des Tastelementes haben soll, damit die Differenz zwischen der Schaltschwelle und dem Ruhewert des Systemparameters dem vorgegebenen Differenzwert entspricht. Kommt es also im Betrieb aufgrund einer verschleißbedingten Änderung der Ruheposition des Tastelemetes tendenziell zu einer Abnahme des Ruhewertes, so bedeutet dies, dass die Differenz zwischen der (oberhalb des Ruhewertes des Systemparameters liegenden) Schaltschwelle und dem aktuellen Ruhewert größer wird als der vorgegebene Differenzwert. Die Differenz zwischen Schaltschwelle und Ruhewert des Systemparameters muss dann so angepasst werden, dass sie wieder dem vorgegebenen Differenzwert entspricht. Dies kann einerseits durch Anhebung des aktuell gemessenen Ruhewertes des Systemparameters auf den Soll-Ruhewert erfolgen, oder alternativ durch Absenkung der Schaltschwelle. Unabhängig davon, ob die Neueinstellung der Differenz zwischen Schaltschwelle und Ruhewert des Systemparameters durch Anpassung der Schaltschwelle oder durch Korrektur des Ruhewertes des Systemparameters erfolgt, gibt es einen eindeutig definierten Soll-Ruhewert des Systemparameters: Dieser ist dadurch definiert, dass die Differenz zwischen der Schaltschwelle und dem Soll-Ruhewert gerade den vorgegebenen Differenzwert zwischen Schaltschwelle und Ruhewert ergibt. Dieser Soll-Ruhewert bildet jeweils die Basis für künftige Vergleiche des jeweils gemessenen Ruhewertes des Systemparameters mit dem Soll-Ruhewert.

Verschleißbedingte Änderungen des Ruhewertes des Systemparameters werden mit dem erfindungsgemäßen Verfahren zuverlässig erkannt, ohne dass im jeweiligen Einzelfall überprüft und sichergestellt werden müsste, dass sich das Tastelement tatsächlich in der Ruheposition befindet.

Umgekehrt kann die irrtümliche Zuordnung einer Änderung der Differenz zwischen Schaltschwelle und Ruhewert des Systemparameters als Auslenkung des Tastelementes dadurch verhindert werden, dass die Änderung dieser Differenz (durch Anpassung der Schaltschwelle oder durch Überlagerung des Systemparameters mit einem Korrekturwert) in so kleinen Schritten vorgenommen wird, dass diese nicht auf eine Auslenkung des Tastelementes hindeuten.

Als Systemparameter, der die jeweilige Position des Tastelementes des Tastschalters widerspiegelt, eignet sich ein elektrischer Systemparameter, z.B. in Form einer elektrischen Spannung, die durch einen dem Tastelement zugeordneten Sensor (und ggf. einen nachgeschalteten Verstärker) zur Verfügung gestellt wird, welcher Bewegungen des Tastelementes registriert und ein entsprechendes Sensorsignal (z.B. in Form eines verstärkten Spannungssignales) erzeugt. Die vorliegende Erfindung ist dabei unabhängig von dem verwendeten Sensorprinzip, das sowohl auf einem berührungslosen Sensor (z.B. einen optischen Sensor in Form einer Lichtschranke oder einen magnetischen Sensor) als auch auf einem die Berührung des Sensors durch das Tastelement zugrundelegenden (z. B. elektrischen) Sensorprinzip beruhen kann.

Die Einstellung der Differenz zwischen der Schaltschwelle und dem Ruhewert des Systemparameters erfolgt bevorzugt in der Weise, dass zu bestimmten, vorgebbaren Zeitpunkten bei Inbetriebnahme des Tastschalters und/oder im Betrieb des Tastschalters der aktuelle Wert des Systemparameters jeweils mit dem Sollwert des Systemparameters in der Ruheposition verglichen wird und dass die Differenz zwischen der Schaltschwelle und dem Ruhewert des Systemparameters immer dann geändert wird, wenn der aktuelle Wert des Systemparameters von dem Soll-Ruhewert entlang einer der eingangs definierten, ersten Richtung des Zahlenstrahls entgegengesetzten Richtung abweicht, also gemäß dem vorliegend erläuterten Beispiel der aktuelle Wert des Systemparameters kleiner ist als der Soll-Ruhewert.

Bei einem batteriebetriebenen Tastschalter folgt eine Neueinstellung der Differenz zwischen Schaltschwelle und Ruhewert des Systemparameters bevorzugt nach jedem Batteriewechsel. Denn es ist davon auszugehen, dass zur Durchführung eines Batteriewechsels regelmäßig das dem Tastschalter zugeordnete Handbuch konsultiert wird und der Benutzer dementsprechend dem Tastschalter vor der erneuten Inbetriebnahme nach einem Batteriewechsel entsprechend der Spezifikation hinreichend Zeit zur Verfügung stellt, um eine ggf. erforderliche Anpassung der Schaltschwelle vorzunehmen, indem die Differenz zwischen Schaltschwelle und Ruhewert des Systemparameters neu eingestellt wird.

Hierzu werden der Vergleich zwischen dem aktuellen Wert des Systemparameters und dem Soll-Ruhewert und die ggf. erforderliche Einstellung der Schaltschwelle mit einer vorgegebenen Taktfrequenz, z.B. in einem zeitlichen Abstand zwischen 10ms und 30ms, solange wiederholt, bis keine Abweichung des aktuellen Wertes des Systemparameters vom Soll-Ruhewert mehr vorliegt, die eine Neueinstellung der Differenz zwischen Schaltschwelle und Ruhewert erfordern würde.

Im späteren Betrieb des Tastschalters ist der zeitliche Abstand zwischen zwei Vergleichen des jeweils aktuellen Wertes des Systemparameters mit dem Soll-Ruhewert bevorzugt abhängig davon, wann die Differenz zwischen der Schaltschwelle und dem Ruhewert des Systemparameters zuletzt geändert worden ist. So kann vorgesehen sein, dass ein Prozess, der zu einem Vergleich des aktuell gemessenen Wertes des Systemparameters mit dem Soll-Ruhewert und gegebenenfalls einer Änderung der Differenz zwischen Schaltschwelle und Ruhewert des Systemparameters führt, in einem zeitlichen Abstand initiiert wird, der durch die Taktfrequenz des zur Steuerung des Prozesses dienenden Mikroprozessors vorgegeben ist. Kommt es hierbei in Folge eines dieser Vergleiche tatsächlich zu einer Änderung der Differenz zwischen Schaltschwelle und Ruhewert des Systemparameters, so wird der nächste Vergleich erst in einem verzögerten, größeren zeitlichen Abstand, von z. B. mehreren Minuten durchgeführt. Der Grund hierfür liegt darin, dass im Betrieb des Tastschalters Situationen denkbar sind, in denen durch Manipulation bzw. unsachgemäße Nutzung des Tastschalters verursachte fehlerhafte Messergebnisse den Vergleich zwischen dem aktuellen Wert des Systemparameters und dem Soll-Ruhewert beeinflussen können. Durch den vergrößerten zeitlichen Mindestabstand zwischen zwei Änderungen der Differenz von Schaltschwelle und Ruhewert des Systemparameters soll sichergestellt werden, dass die vorgenannten Fehler nicht zu einer zu großen Änderung der Schaltschwelle führen können. Denn nach einem Vergleich des aktuellen Wertes des Systemparameters mit dem Soll-Ruhewert wird die Differenz zwischen Schaltschwelle und Ruhewert des Systemparameters zunächst allenfalls um einen Korrekturwert korrigiert. Die nächste Korrektur kann frühestens nach dem vorstehend erwähnten vergrößerten zeitlichen Mindestabstand erfolgen. Es wird davon ausgegangen, dass ein fehlerhafter bzw. unsachgemäßer Betrieb des Tastschalters sich nicht über einen so langen Zeitraum hinzieht.

Eine Neueinstellung der Differenz zwischen Schaltschwelle und Ruhewert des Systemparameters erfolgt im Betrieb des Tastschalters unter den vorstehend (am Beispiel einer neuen Inbetriebnahme des Tastschalters) angegebenen Bedingungen für die Abweichung des aktuellen Wertes des Systemparameters vom Soll-Ruhewert.

Wie bereits eingangs erwähnt, kann die Neueinstellung der Differenz zwischen Schaltschwelle und Ruhewert des Systemparameters einerseits durch Änderung der Schaltschwelle erfolgen oder andererseits durch eine Überlagerung des Systemparameters mit einem Korrekturwert, also einer Änderung des Ruhewertes des Systemparameters. Diese beiden Möglichkeiten der Neueinstellung der Differenz zwischen Schaltschwelle und Ruhewert des Systemparameters sind unabhängig davon von Bedeutung, ob die Differenz zwischen der Schaltschwelle und dem Ruhewert, wie bei der vorliegenden Erfindung vorgesehen, ausschließlich entlang einer Richtung des Zahlenstrahles verändert wird. Vielmehr eröffnet sich bei einem Verfahren zur Einstellung einer Schaltschwelle eines Tastschalters grundsätzlich die Möglichkeit, je nach den schaltungstechnischen Gegebenheiten im Einzelfall, entweder die Schaltschwelle selbst oder den Ruhewert des Systemparameters entsprechend anzupassen.

Die jeweilige Änderung kann dabei einerseits in konstanten, unveränderlichen Schritten erfolgen oder andererseits in Abhängigkeit von der Abweichung des aktuell gemessenen Ruhewertes des Systemparameters von dessen Soll-Ruhewert. Die Änderung kann dann etwa in der Weise erfolgen, dass jeweils nur ein bestimmter Prozentsatz (kleiner oder gleich 100 %) der Abweichung des aktuell gemessenen Ruhewertes des Systemparameters vom Soll-Ruhewert ausgeglichen wird, beispielsweise 50 %. Hierdurch lässt sich sicherstellen, dass der neu eingestellte Ruhewert in keinem Fall über dem Soll-Ruhewert liegen kann.

Weitere Merkmale und Vorteile der Erfindung werden bei nachfolgender Beschreibung eines Ausführungsbeispieles anhand der Figuren deutlich werden.

### Es zeigen:

- Figur 1: einen Längsschnitt durch einen Tastschalter zur Bestimmung der Position eines Werkstückes;
- Figur 2: eine schematische Darstellung eines Spannungsverlaufs bei Annäherung eines Tastelementes des Tastschalters aus Figur 1 an ein Werkstück;
- Figur 3: ein Blockschaltbild einer Schaltungsanordnung zur Einstellung der Schaltschwelle des Tastschalters;
- Figur 4a: ein Flussdiagramm betreffend die Einstellung der Schaltschwelle des Tastschalters nach einem Batteriewechsel;
- Figur 4b: ein Flussdiagramm betreffend die Einstellung der Schaltschwelle des Tastschalters im laufenden Betrieb.

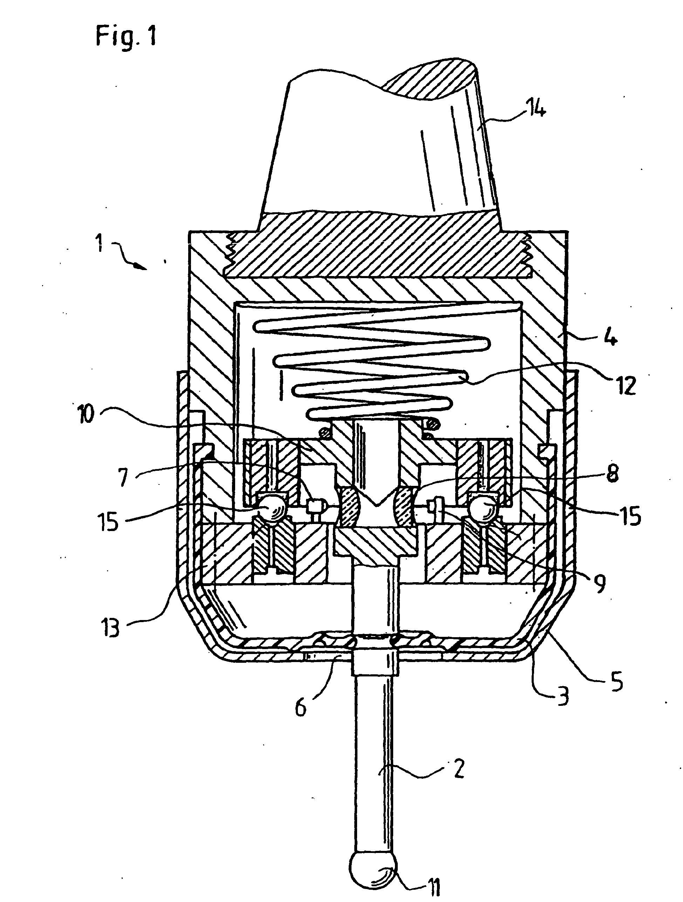

Figur 1 zeigt einen Tastschalter 1, der zur Bestimmung der Position eines in einer Maschine eingespannten Werkstücks, beispielsweise eines in einer Fräsmaschine eingespannten Werkstücks, verwendet wird. Der Tastschalter 1 ist mittels eines Konus 14 in eine Spindel der Maschine eingesetzt. Um eine feste Verbindung des Tastschalters 1 mit der Spindel zu sichern, ist der Konus 14 an einem Gehäuse 4 des Tastschalters 1 fest angeordnet.

An dem dem Konus 14 gegenüberliegenden Ende des Gehäuses 4 des Tastschalters 1 weist der Tastschalter 1 ein Tastelement in Form eines Taststiftes 2 mit einer Antastkugel 11 auf, der mittels eines Kugellagers 15 in alle Richtungen beweglich im Gehäuse 4 gelagert ist, also auch in vertikaler Richtung. Der Zwischenraum zwischen dem Gehäuse 4 des Tastschalters 1 und dem Taststift 2 ist durch eine Dichtung 3 verschlossen. Des Weiteren ist um den Taststift 2 ein Blechschutz 5 angeordnet, der Beschädigungen der Dichtung 3 durch Späne, die bei der Bearbeitung des Werkstücks entstehen, verhindern soll. In unmittelbarer Nähe zum Taststift 2 weist der Blechschutz 5 eine Öffnung 6 auf, die eine Auslenkung des Taststiftes 2 aus dessen Ruheposition ermöglicht. Die Ruheposition des Taststiftes 2 liegt in der Regel auf der Symmetrieachse des Tastschalters 1, wie in Figur 1 gezeigt.

Der Taststift 2 ist mit einem Tasthalter 10 fest verbunden. Am Tasthalter 10 ist ein Ende einer Druckfeder 12 angeordnet, die mit ihrem anderen Ende am Gehäuse 4 des Tastschalters 1 anliegt. Des Weiteren ist zur Lagerung des Tasthalters 10 am Gehäuseboden 13 des Gehäuses 4 des Tastschalters 1 das oben erwähnte Kugellager 15 vorgesehen.

Bei Kontakt der Antastkugel 11 des Taststiftes 2 mit dem in der Maschine eingespannten Werkstück wird der Taststift 2 aus dessen Ruheposition ausgelenkt. Diese Auslenkung wird durch eine Detektoranordnung 7 bis 9 erfasst. Die Detektoranordnung weist hierzu einen feststehenden optischen Sender 7, der als LED ausgebildet ist, sowie ein hierzu ausgerichtetes, ebenfalls feststehendes Differenzialphotoelement 9 auf. In der optischen Achse des optischen Senders 7 sowie des Differenzialphotoelements 9 ist ein Linsensystem 8 am beweglichen Taststift 2 fest angeordnet.

Bei der Auslenkung des Taststiftes 2 kommt es zu einer Änderung der Intensität des von dem optischen Sender 7 in das Differenzialphotoelement 9 einfallenden Lichtes und somit zu einer Änderung einer Ausgangsspannung des Differenzialphotoelements 9. Die Änderung der Ausgangsspannung des Differenzialphotoelements 9 ist ein Maß für die Auslenkung des Taststiftes 2, so dass ein Kontakt des Taststiftes 2 mit dem Werkstück detektierbar ist.

Genauer führt eine Auslenkung des Taststiftes 2 zu einer Änderung des Ausgangsstroms des Differenzialphotoelements 9, aus der mittels eines geeigneten Verstärkers eine messbare Änderung einer entsprechenden Spannung erzeugt wird. Mit anderen Worten ausgedrückt ist die Änderung der Ausgangsspannung ein Abbild der Änderung des Ausgangsstroms und somit auch der Lichtintensität am Differenzialphotoelement 9. Dies wird hier verkürzt als Änderung der Ausgangsspannung des Differenzialphotoelements 9 aufgrund einer Auslenkung des Taststiftes 2 bezeichnet.

Anstelle der vorstehend beschriebenen optischen Detektoranordnung lassen sich im Zusammenhang mit der vorliegenden Erfindung auch andere Detektoren einsetzen, die z.B. auf magnetischen, induktiven oder kapazitiven Prinzipien beruhen. Denn die Erfindung bezieht sich auf die Einstellung der Schaltschwelle des Tastschalters 1 und ist unabhängig von der Art des verwendeten Detektors.

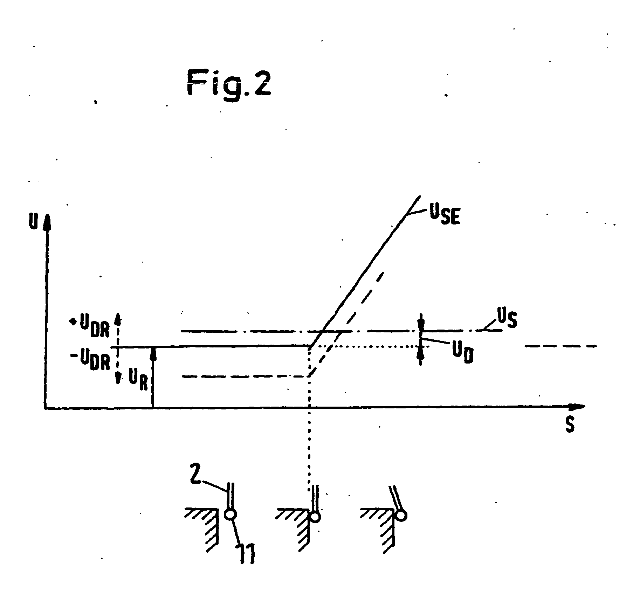

Die Ausgangsspannung und der Antastvorgang sind in Figur 2 dargestellt. Solange der Taststift 2 beim Antastvorgang das Werkstück nicht berührt und nicht aus seiner Ruheposition ausgelenkt wird, ist die Ausgangsspannung U_{SE} des Differenzialphotoelements 9 in der Regel konstant und entspricht einer Spannung, die nachfolgend Ruhespannung U_{R} genannt wird. Erst bei Auslenkung des Taststiftes 2 aufgrund des Kontaktes der Antastkugel 11 des Taststiftes 2 mit dem Werkstück steigt die Ausgangsspannung U_{SE} an.

Bei Überschreitung einer Schaltschwelle U_{S} wird durch den Tastschalter 1 ein Schaltsignal erzeugt, das an eine hier nicht dargestellte Auswerteeinheit weitergeleitet wird. Die Schaltschwelle U_{S} ist derart gewählt, dass sie einen um einen Betrag U_{D} größeren Wert als die Ruhespannung U_{R} aufweist. Der Betrag U_{D} (Differenzwert) muss keine Konstante sein. Wesentlich ist nur, dass U_{D} derart gewählt ist, dass die Schaltschwelle U_{S} von der Ruhespannung U_{R}, also der Ausgangsspannung U_{SE} des Differenzialphotoelements 9 in der Ruheposition des Taststiftes 2 abweicht, um die ordnungsgemäße Funktion des Tastschalters 1 sicherzustellen.

Die in Figur 2 dargestellte Ruhespannung U_{R} ist nicht immer konstant, sondern sie ist - über einen längeren Zeitraum gesehen - einer Drift unterworfen. Ursache hierfür ist, dass der Taststift 2 nach einer Auslenkung nicht immer in die ursprüngliche Ruheposition zurückkehrt, sondern eine davon abweichende Position, also eine neue Ruheposition einnehmen kann. Dies ist durch mechanischen Verschleiß des Tastschalters 1, aber auch durch die Einwirkung von Feuchte und Temperatur auf den Tastschalter 1 bedingt. Dadurch kommt es in der Ruheposition des Taststiftes 2 zu einer Veränderung der relativen Lage des optischen Sensors 7, des Linsenpaares 8 und des Differentialphotoelements 9 zueinander, die zu einer Änderung und somit Drift der Ruhespannung U_{R} führt.

Es hat sich gezeigt, dass sich die Ruhespannung U_{R} durch den Drift verringert, so dass der Abstand zwischen der in der Ruheposition des Taststiftes 2 vorliegenden Ruhespannung U_{R} und der Schaltschwelle U_{S} größer wird als der vorgegebene Differenzwert U_{D}. Dies hat zur Folge, dass die Genauigkeit des Tastschalters 1 beeinträchtigt wird.

Dieser Effekt ist in Figur 2 beispielhaft anhand der gestrichelten Linie dargestellt, die eine um einen Wert U_{DR} verringerte Ruhespannung des Tastschalters als Folge von Verschleiß repräsentiert. Dies entspricht einer Zunahme der Differenz zwischen der Schaltschwelle U_{S} und der Ruhespannung um eben jenen Wert U_{DR}. Anhand der gestrichelten Kurve ist ferner erkennbar, dass aufgrund dieser Verschiebung der Ruhespannung U_{R} zu kleineren Spannungswerten die Auslenkung S, bei der der Tastschalter 1 ein Schaltsignal abgibt, zu größeren Werten hin verschoben ist. (Die entsprechenden Auslenkungen, bei denen das Schaltsignal erzeugt wird, ergeben sich in Figur 2 jeweils aus dem Schnittpunkt der gemessenen Ausgangsspannung U_{SE} mit der Schaltschwelle U_{S.})

Es hat sich gezeigt, dass Verschleiß (unterstützt durch Feuchtigkeit und Temperatureinflüsse) stets zu einer Änderung der Ruhespannung U_{R} eines Tastschalters entlang einer Richtung führt. Dies ist bei dem in Figur 1 dargestellten Tastschalter 1 darauf zurückzuführen, dass als Folge von Verschleiß der mittels des Kugellagers 15 gelagerte Tasthalter 10 (entlang der Erstreckungsrichtung des nicht ausgelenkten Taststiftes 2 betrachtet) tendenziell näher an den Gehäuseboden 13 des Gehäuses 4 des Tastschalters 1 heranrückt, vgl. Figur 1. Dies führt zu einer stets gleichgerichteten Veränderung der Ruhespannung U_{R}, wobei die Richtung dieser Änderung (Abnahme oder Zunahme der Ruhespannung) von der mechanischen Konstruktion des Tastschalters 1, von der Art des zur Erfassung der Lage des Taststiftes 2 verwendeten Sensors sowie von der dem Sensor zugeordneten elektrischen Schaltung abhängen kann. Im vorliegenden Fall führt eine verschleißbedingte Annäherung des Tasthalters 10 an den Gehäuseboden 13 zu einer kontinuierlichen Abnahme der Ruhespannung UR.

Von Bedeutung ist ferner, dass eine Auslenkung des Taststiftes 2 - entsprechend dem in Figur 2 dargestellten Verlauf der Ausgangsspannung U_{SE} des Differenzialphotoelementes 9 - genau die entgegengesetzte Wirkung, nämlich eine Zunahme der Ausgangsspannung U_{SE} des Differenzialphotoelementes 9 zur Folge hat. Dies liegt daran, dass eine Auslenkung des Taststiftes 2 bewirkt, dass der mittels des optischen Senders 7 und des Differenzialphotoelementes 9 abgetastete Bereich des Taststiftes 2 (nämlich das Linsensystem 8) entlang der Erstreckungsrichtung des Taststiftes 2 von dem Gehäuseboden 13 wegbewegt wird. Dies ist wiederum darauf zurückzuführen, dass eine weitere Annäherung des abgetasteten Bereiches 8 des Taststiftes 2 an den Gehäuseboden 13 durch die Kugeln des Kugellagers 15 verhindert wird. Daher führt eine Auslenkung des Taststiftes 2 stets dazu, dass sich der mittels des optischen Senders 7 und des Differenzialphotoelementes 9 abgetastete Bereich des Taststiftes 2 von dem Gehäuseboden 13 entfernt. Dies ist genau entgegengesetzt zu der tendenziellen Annäherung des abgetasteten Bereiches des Taststiftes 2 an den Gehäuseboden 13 als Folge von Verschleiß, der zu einer Abnutzung des Kugellagers 15 und damit zu einer Reduzierung des Abstandes zwischen Tasthalter 10 und Gehäuseboden 13 führt.

Die Tatsache, dass die Änderung der Ruhespannung U_{R} im Betrieb des Tastschalters 1 (als Folge von Verschleiß unter Mitwirkung von Feuchtigkeit und Temperatureinflüssen) stets in ein und dieselbe Richtung führt, und zwar vorliegend zu einer Abnahme der Ruhespannung U_{R} und damit zu einer Zunahme der Differenz zwischen Schaltschwelle U_{S} und Ruhespannung U_{R}, sowie die Tatsache, dass dieser Effekt gegenläufig zu der Änderung der Ausgangsspannung U_{SE} des Differenzialphotoelementes 9 bei einer Auslenkung des Taststiftes 2 ist, kann für ein vereinfachtes Verfahren bei der Einstellung der Schaltschwelle U_{S} genutzt werden.

Hierbei geht es um eine Einstellung der Schaltschwelle U_{S} derart, dass die Differenz zwischen der Schaltschwelle U_{S} und der Ruhespannung U_{R} einen bestimmten, vorgegebenen Differenzwert U_{D} einnimmt, Einstellung der Schaltschwelle U_{S} bedeutet dabei nicht, dass unmittelbar die die Schaltschwelle U_{S} bestimmende Spannung geändert werden müsste, sondern die Neueinstellung der Schaltschwelle U_{S} kann auch dadurch erfolgen, dass die Ruhespannung U_{R} entsprechend korrigiert wird. Denn für die Einstellung der Schaltschwelle ist allein die Differenz zwischen der Schaltschwelle U_{S} und der Ruhespannung U_{R} maßgeblich, so dass die Schaltschwelle sowohl durch Einstellung der der Schaltschwelle zugrunde liegenden Spannung U_{S} als auch durch Korrektur der Ruhespannung U_{R} einstellbar ist.

Ausgehend von den oben beschriebenen Beobachtungen hinsichtlich der Änderung der Ruhespannung U_{R} aufgrund von Verschleiß sowie hinsichtlich der Änderung der Ausgangsspannung U_{SE} des Differenzialphotoelementes 9 bei Auslenkung des Taststiftes 2 ergeben sich folgenden Konsequenzen:
- Wird der Tastschalter 1 zu einem gegebenen Ausgangszeitpunkt mit einer gegebenen Ruhespannung U_{R} betrieben, so ist jede gemessene Spannung, die oberhalb dieser Ruhespannung U_{R} liegt, auf eine Auslenkung des Taststiftes 2 zurückzuführen. Umgekehrt ist jeder gemessene Spannungswert, der unterhalb der ursprünglichen Ruhespannung U_{R} liegt, auf eine Absenkung der Ruhespannung als Folge von Verschleiß zurückzuführen. Hierdurch lassen sich die Auswirkungen einer Auslenkung des Taststiftes 2 einerseits und von Verschleiß der Anordnung andererseits auf die gemessene Ausgangsspannung des Differenzialphotoelementes 9 klar trennen.
- Es ist nicht erforderlich, bei der laufenden Überprüfung, ob ein Absenken der Ruhespannung U_{R} als Folge von Verschleiß eingetreten ist, sicherzustellen, dass sich der Taststift 2 bei der jeweiligen Prüfung tatsächlich im Ruhezustand befindet. Denn ist der Taststift zum Zeitpunkt einer entsprechenden Überprüfung ausgelenkt, so führt dies dazu, dass die Ausgangsspannung U_{SE} des Differenzialphotoelementes 9 gegenüber der Ruhespannung U_{R} vergrößert ist. Dies lässt sich auf der Grundlage der obigen Beobachtungen unmittelbar einer Auslenkung des Taststiftes 2 zuordnen, so dass eine Verwechslung mit einer Änderung der Ruhespannung U_{R} durch Verschleiß ausgeschlossen ist.

Umgekehrt lässt sich eine Absenkung der Ruhespannung U_{R} als Folge von Verschleiß eindeutig daran erkennen, dass ein gemessener Wert der Ausgangsspannung U_{SE} des Differenzialphotoelementes 9 unterhalb der ursprünglichen Ruhespannung U_{R} liegt. Denn ein solcher Effekt kann nicht auf eine Auslenkung des Taststiftes 2 zurückzuführen sein, die ja ausschließlich zu einer Zunahme der Ausgangsspannung U_{SE} des Differenzialphotoelementes 9 führt.
- Im Ergebnis braucht also zur Feststellung einer Absenkung der Ruhespannung U_{R} als Folge von Verschleiß lediglich in regelmäßigen zeitlichen Abständen überprüft zu werden, ob der aktuelle Wert der Ausgangsspannung U_{SE} niedriger ist als der zuletzt gültige Wert der Ruhespannung U_{R} (Soll-Ruhewert). Wird eine Unterschreitung des Soll-Ruhewertes durch eine aktuell gemessene Ausgangsspannung U_{SE} des Differenzialphotoelementes 9 ermittelt, so lässt sich daraus zweifelsfrei der Schluss ziehen, dass eine Absenkung der Ruhespannung U_{R} erfolgt ist und es kann eine entsprechende Korrektur durchgeführt werden.
- Wird demgegenüber bei einer der Prüfungen ein Wert der Ausgangsspannung U_{SE} des Differenzialphotoelementes 9 ermittelt, der oberhalb des Soll-Ruhewertes der Ruhespannung U_{R} liegt, so ist dies eindeutig einer Auslenkung des Taststiftes 2 zuzuschreiben und es erfolgt keine Neueinstellung der Schaltschwelle des Taststiftes. Das Gleiche gilt selbstverständlich, wenn eine aktuell gemessene Ausgangsspannung U_{SE} des Differenzialphotoelementes 9 der zuletzt gültigen Ruhespannung U_{R} entspricht; dies deutet auf eine unveränderte Ruhespannung U_{R} hin.
- Falls zum Zeitpunkt einer Überprüfung der Ausgangsspannung U_{SE} des Differenzialphotoelementes 9 eine verschleißbedingte Absenkung der Ruhespannung U_{R} von einer Auslenkung des Taststiftes 2 überlagert sein sollte, so kann zu diesem Zeitpunkt die tatsächliche Änderung der Ruhespannung U_{R} selbstverständlich nicht korrekt erkannt werden. Indem jedoch die Abfrage der Ausgangsspannung U_{SE} des Differenzialphotoelementes 9, mit dem Ziel bei Bedarf eine Neueinstellung der Differenz zwischen Schaltschwelle U_{S} und Ruhespannung U_{R} vorzunehmen, regelmäßig wiederholt wird, ist sichergestellt, dass bei einer der späteren Messungen, wenn der Taststift 2 sich in seiner Ruheposition befindet, ein repräsentatives Ergebnis für eine mögliche Abnahme der Ruhespannung U_{R} ermittelt wird.

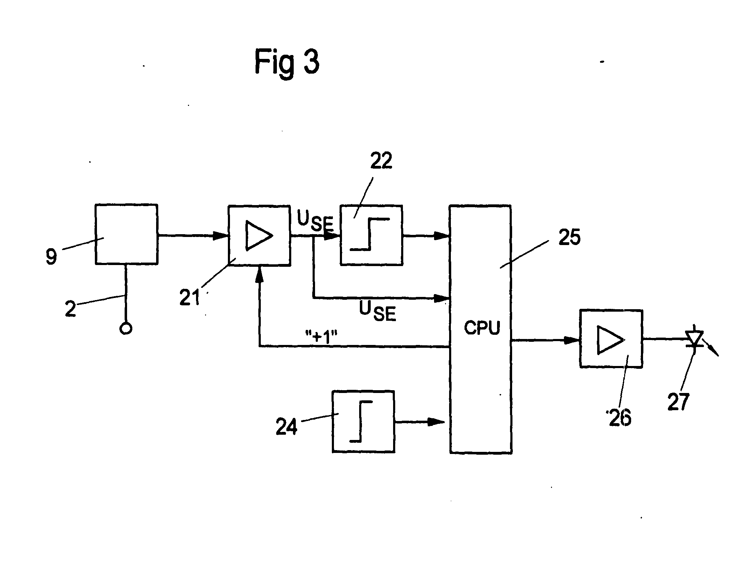

Figur 3 zeigt eine Schaltungsanordnung zur Einstellung der Differenz zwischen Schaltschwelle U_{S} und Ruhespannung U_{R} eines Tastschalters auf einen gegebenen Differenzwert U_{D}.

Dabei ist dem Differenzialphotoelement 9 des Tastschalters 1, das ein der Auslenkung des Taststiftes 2 entsprechendes Ausgangssignal in Form eines Stromes erzeugt, ein Verstärker 21 zur Verstärkung des Ausgangssignales des Differenzialphotoelementes 9 nachgeschaltet, der die relevante Ausgangsspannung U_{SE} erzeugt, die vorliegend auch einfach als Ausgangsspannung des Differenzialphotoelementes 9 bezeichnet wird. Der Verstärker 21 ist wiederum ausgangsseitig mit einem Trigger 22 verbunden, auf dessen einen Eingang das verstärkte Ausgangssignal des Differenzialphotoelementes 9 gelegt ist. Der Trigger 22 dient zum Vergleich der jeweils gemessenen, verstärkten Ausgangsspannung des Differenzialphotoelementes 9 mit einer Schaltschwelle, derart, dass ein Überschreiten der Schaltschwelle ein Schaltsignal auslöst. Dieses Schaltsignal wird einem Mikroprozessor 25 zugeführt, mit dem der Trigger 22 ausgangsseitig verbunden ist. Zur Weiterleitung des Schaltsignales an eine Auswerteeinheit ist dem Mikroprozessor 25 eine geeignete Sendeeinrichtung 26, 27, z.B. in Form eines Infrarotsenders, nachgeordnet.

Weiterhin erhält der Mikroprozessor 25 aus einem zusätzlichen Trigger 24 (Reset-Baustein) Informationen darüber, ob die Batteriespannung des batteriebetriebenen Tastschalters oberhalb eines bestimmten Mindestwertes liegt. Hierdurch kann festgestellt werden, ob zu einem gegebenen Zeitpunkt im Tastschalter eine Batterie vorhanden ist.

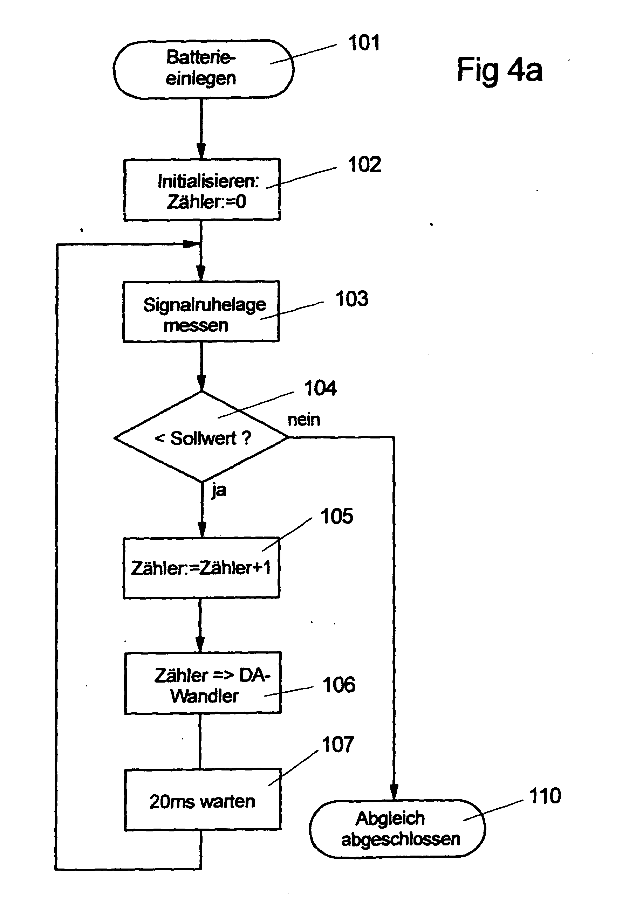

Anhand des Flussdiagrammes aus Figur 4a wird nun zunächst eine mittels der Schaltungsanordnung aus Figur 3 vorzunehmende Überprüfung und ggf. Neueinstellung der Differenz zwischen Schaltschwelle U_{S} und Ruhespannung U_{R} des Tastschalters 1 bei einem Batteriewechsel erläutert.

Eine Neueinstellung der Schaltschwelle bzw. genauer der Differenz zwischen Schaltschwelle und Ruhespannung bei einem Batteriewechsel ist deshalb vorteilhaft, weil bei einem Batteriewechsel bestimmte definierte Schritte abgearbeitet werden müssen, wozu in der Regel das dem Tastschalter zugehörige Handbuch konsultiert wird. Hierdurch kann insbesondere davon ausgegangen werden, dass unmittelbar nach einem Batteriewechsel - wie in der entsprechenden Spezifikation vermerkt - hinreichend Zeit für eine Neueinstellung der Schaltschwelle des Tastschalters zur Verfügung gestellt wird, bevor dieser wieder in Betrieb genommen wird, bevor also neue Auslenkungen des Taststiftes erfolgen. Es kann also davon ausgegangen werden, dass ein bestimmter Zeitraum zur Verfügung steht, in dem die Neueinstellung der Schaltschwelle unbeeinflusst von möglichen Auslenkungen des Taststiftes zügig durchgeführt werden kann.

Wie anhand Figur 4a dargestellt, wird in einem ersten Schritt 101 nach dem Einlegen einer neuen Batterie in den Tastschalter 1 (detektiert durch den dem Mikroprozessor 25 zugeordneten weiteren Trigger 24) in zwei weiteren Schritten 102, 103 zunächst ein Zähler des Mikroprozessors auf Null gesetzt und anschließend die Ausgangsspannung U_{SE} des Differenzialphotoelementes 9 gemessen, wobei davon ausgegangen werden kann, dass es sich um die Ausgangsspannung U_{SE} in der Ruheposition des Taststiftes 2 handelt. Die hinter dem Verstärker 21 gemessene Ausgangsspannung U_{SE} wird dabei dem Mikroprozessor 25 mittels eines Analog-/Digital-Wandlers zugeführt.

Durch Vergleich 104 wird anschließend ermittelt, ob die gemessene Ausgangsspannung U_{SE} kleiner ist als der Sollwert der Ruhespannung U_{R}. Unter dem Sollwert der Ruhespannung U_{R} wird dabei diejenige Spannung verstanden, mit der der angestrebte Differenzwert U_{D} zwischen Schaltschwelle U_{S} und Ruhespannung U_{R} erreicht wird. Bei einem Verfahren, bei dem zur Einstellung der Differenz zwischen Schaltschwelle U_{S} und Ruhespannung U_{R} jeweils die Ruhespannung U_{R} zur Kompensation von Abweichungen korrigiert wird, die Schaltschwelle U_{S} aber unverändert bleibt, ist der Sollwert der Ruhespannung U_{R} eine Konstante. Bei der alternativen Vorgehensweise, wonach zur Einstellung der Differenz zwischen Schaltschwelle U_{S} und Ruhespannung U_{R} eine Veränderung (nämlich ein Absenken) der Schaltschwelle U_{S} erfolgt, ändert sich selbstverständlich der Sollwert der Ruhespannung U_{R} bei jeder Änderung der die Schaltschwelle U_{S} definierenden Spannung. In jedem Fall ist aber sichergestellt, dass zu einem gegebenen Zeitpunkt im Betrieb des Tastschalters 1 jeweils ein eindeutig definierter Sollwert für die Ruhespannung U_{R} vorliegt, nämlich derjenige Wert der Ruhespannung U_{R}, der zu der vorgegebenen, angestrebten Differenz zwischen Schaltschwelle U_{S} und Ruhespannung U_{R} führt.

Ergibt der Vergleich 104, dass die gemessene Ausgangsspannung U_{SE} des Differenzialphotoelementes 9 nicht kleiner ist als der Sollwert der Ruhespannung U_{R}, so wird das Verfahren zur Neueinstellung der Differenz zwischen Schaltschwelle U_{S} und Ruhespannung U_{R} unmittelbar abgebrochen 110. Denn da nach einem Batteriewechsel davon ausgegangen wird, dass der Taststift 2 nicht ausgelenkt ist, also kein Einfluss auf die Ausgangsspannung U_{SE} des Differenzialphotoelementes 9 durch Auslenkung des Taststiftes 2 vorliegt, weist das vorgenannte Ergebnis des Vergleichs 104 darauf hin, dass der aktuelle Wert der Ausgangsspannung U_{SE} bei nicht ausgelenktem, in seiner Ruheposition befindlichen Taststift nicht unter den Sollwert der Ruhespannung U_{R} abgesunken ist.

Wird jedoch umgekehrt bei dem Vergleich 104 eine entsprechende Absenkung der Ruhespannung U_{R} unter den Sollwert festgestellt, so wird in zwei folgenden Schritten 105, 106 der Zähler des Mikroprozessors 25 um eine Stufe erhöht und eine dieser Erhöhung entsprechende Korrekturspannung mittels eines Digital-/Analog-Wandlers der Ausgangsspannung des Differenzialphotoelementes 9 am Verstärker 22 hinzugefügt.

Dies entspricht einer Anhebung der Ruhespannung U_{R} des Tastschalters 1 durch die Addition eines Korrekturwertes zu der tatsächlich gemessenen Ruhespannung.

Gemäß einer Variante handelt es sich bei den einzelnen Korrekturwerten, die jeweils zu der Ausgangsspannung U_{SE} am Verstärker 21 addiert werden, um konstante Werte. Das heißt, bei jeder gemessenen Unterschreitung des Sollwertes der Ruhespannung U_{R} wird ein entsprechender, konstanter Korrekturwert zu der Ausgangsspannung des Verstärkers 21 hinzugefügt. Dies wird ggf. solange wiederholt, bis ein Vergleich ergibt, dass die in der Ruheposition des Taststiftes 2 gemessene Ausgangsspannung U_{SE} (unter Berücksichtigung der hinzugefügten Korrekturwerte) den Sollwert der Ruhespannung U_{R} nicht mehr unterschreitet. Die einzelnen Korrekturwerte, die bei jeder Erhöhung des Zählers um den Wert 1 zu der Ausgangsspannung des Verstärkers 21 hinzugefügt werden, sind dabei so klein gewählt, dass sie keine Überschreitung der Schaltschwelle U_{S} des Tastschalters bewirken. Das heißt, das Hinzufügen eines Korrekturwertes zu der Ausgangspannung des Verstärkers 21 kann nicht als eine Auslenkung des Taststiftes 2 fehlgedeutet werden und kann somit nicht zur versehentlichen Abgabe eines Schaltsignales führen. Die aufaddierten Korrekturwerte - entsprechend dem Zählerstand bei Abschluss der Neueinstellung der Schaltschwelle - bestimmen den neuen Wert der Ruhespannung U_{R}.

Gemäß einer anderen Ausführungsform kann die Erhöhung der Ausgangsspannung U_{SE} des Verstärkers 21 auch in Schritten erfolgen, die an die beim jeweiligen Vergleich 104 ermittelte Differenz zwischen dem Sollwert und dem gemessenen Istwert der Ruhespannung U_{R} angepasst sind. Der Korrekturwert, der jeweils zu der Ausgangsspannung U_{SE} am Verstärker 21 addiert wird, ergibt sich dann also aus der Multiplikation der bei dem Vergleich 104 gemessenen Differenz mit einem Faktor, der kleiner oder gleich 1 ist; er bildet also einen Bruchteil der ermittelten Differenz.

Anhand Figur 4a wird ferner deutlich, dass nach jeder Beaufschlagung der Ausgangsspannung U_{SE} des Verstärkers 21 mit einem Korrekturwert das System für einen vorgegebenen Zeitraum, z. B. 20ms abwartet, bevor der vorstehend beschriebene Prozess erneut durchlaufen wird, also insbesondere ein weiterer Vergleich 104 zwischen der tatsächlich gemessenen Ruhespannung U_{R} und dem Sollwert der Ruhespannung U_{R} durchgeführt wird.

Insgesamt wird der Prozess solange fortgeführt, also die vorbeschriebene Schleife mit einer jeweiligen Erhöhung des Zählerstandes und der Addition eines der Erhöhung des Zählerstandes entsprechenden Korrekturwertes zu der Ausgangsspannung U_{SE} des Verstärkers 21 so oft durchlaufen, bis der Vergleich 104 ergibt, dass die mit den Korrekturwerten beaufschlagte Ausgangsspannung U_{SE} des Verstärkers 21 (bei in Ruheposition befindlichen Taststift 2) nicht mehr unterhalb des Sollwertes der Ruhespannung U_{R} liegt.

Die Differenz zwischen Schaltschwelle U_{S} und Ruhespannung U_{R} ist dann für eine Aufnahme des Betriebs des Tastschalters nach dem Batteriewechsel auf den angestrebten, vorgegebenen Differenzwert eingestellt.

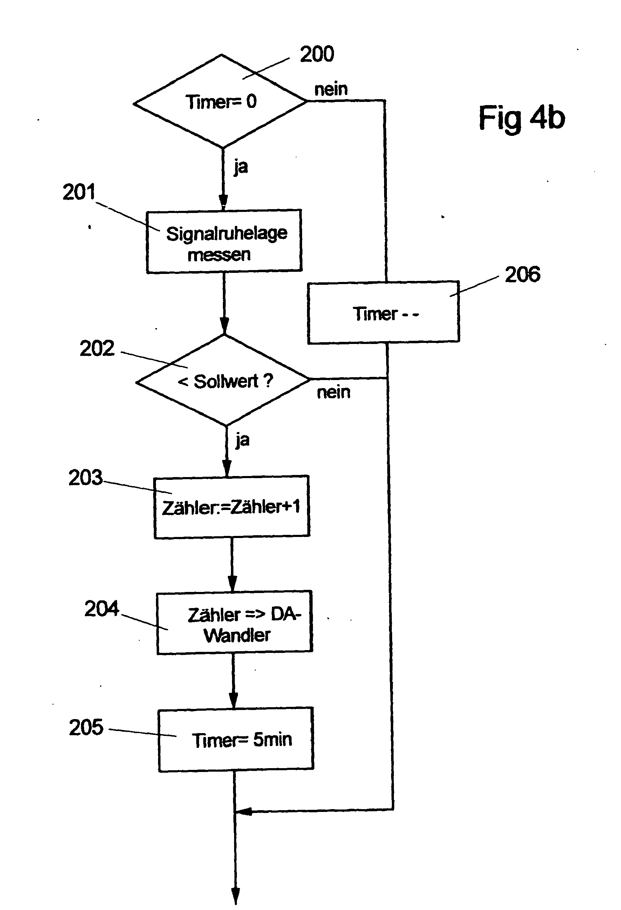

Gemäß Figur 4b erfolgt darüber hinaus eine laufende Prüfung und ggf. Nachregelung der Differenz zwischen Schaltschwelle U_{S} und Ruhespannung U_{R} im Betrieb des Tastschalters.

Hierbei wird nach jeder Aktivierung des entsprechenden Prozesses in einem ersten Schritt 201 die durch den Verstärker 21 verstärkte Ausgangsspannung U_{SE} des Differenzialphotoelementes 9 gemessen und ein Vergleich 202 mit dem Sollwert der Ruhespannung U_{R} durchgeführt. Liegt die gemessene Ausgangsspannung U_{SE} unterhalb des Sollwertes der Ruhespannung U_{R}, so kann dies nur darauf zurückzuführen sein, dass die Ruhespannung U_{R} durch Verschleiß abgesunken ist. Dementsprechend wird wiederum der Zählerstand im Zähler des Mikroprozessors 25 erhöht und entsprechend der Erhöhung des Zählerstandes ein Korrekturwert zu der Ausgangsspannung U_{SE} des Verstärkers 21 addiert, d.h. die aufsummierten (der Ausgangspannung hinzugefügten) Korrekturwerte werden um eine Einheit, d.h. einen zusätzlichen Korrekturwert, erhöht. Nach einer solchen Korrektur 203, 204 der Ausgangsspannung U_{SE} des Verstärkers 21 wird eine Uhr ("Timer") des Mikroprozessors 25 in einem nächsten Schritt 205 auf einen bestimmten vorgegebenen Wert eingestellt, z.B. 5 Minuten. Ein weiterer Vergleich des aktuell gemessenen Wertes der Ausgangsspannung U_{SE} mit dem Sollwert der Ruhespannung U_{R} findet nach Addition eines Korrekturwertes zu der Ausgangsspannung U_{SE} des Verstärkers 21 erst dann statt, wenn der entsprechende Zeitraum, von z.B. 5 Minuten, abgelaufen ist, was durch entsprechende Abfragen 200 und zeitliches Aktualisieren 206 der Uhr sichergestellt wird.

Die Aktivierung des vorstehenden Prozesses kann in einfacher Weise in einem zeitlichen Abstand (von z. B. 0.25ms) erfolgen, der durch die Taktfrequenz des verwendeten Mikroprozessors 25 (z.B. 4kHz) vorgegeben ist. D. h., der anhand Figur 4b beschriebene Prozess wird im laufenden Betrieb des Tastschalters grundsätzlich in einem zeitlichen Abstand (von z. B. 0.25ms) aktiviert, der der Taktfrequenz des verwendeten Mikroprozessors entspricht. Führt jedoch der Prozess zu einer Korrektur des Ruhewertes des Systemparameters, d.h. der Ruhespannung U_{R} (durch Addition eines Korrekturwertes zu der Ausgangsspannung U_{SE} des Verstärkers 21) so wird in einem entsprechenden Prozessschritt 205 durch Einstellung einer Uhr sowie durch eine zugeordnete Abfrage 200 hinsichtlich der aktuellen Einstellung der Uhr sichergestellt, dass der nächste Vergleich 202 zwischen der Ausgangsspannung U_{SE} und dem Sollwert der Ruhespannung U_{R} erst nach einem vergrößerten zeitlichen Abstand von z. B. 5min durchgeführt wird. Hierdurch wird erreicht, dass zwischen zwei Änderungen der Ruhespannung U_{R} (durch Addition eines Korrekturwertes) zumindest der durch die Einstellung 205 der Uhr vorgegebene Zeitraum, von z. B. 5min, verstreicht.

Falls zu dem Zeitpunkt eines Vergleiches 202 der Taststift 2 gerade ausgelenkt sein sollte und diese Auslenkung eine Abnahme der tatsächlichen Ruhespannung U_{R} unter ihren Sollwert überlagern sollte, so ist sichergestellt, dass in einer der nächsten Abfragen, die ja regelmäßig zu bestimmten Zeitpunkten, beispielsweise alle 0.25ms stattfindet, das Absinken der Ruhespannung U_{R} detektiert wird, wenn zu dem entsprechenden Zeitpunkt keine Auslenkung des Taststiftes vorliegt.

Eine Manipulation ist bei diesem Verfahren allenfalls dann denkbar, wenn an dem Taststift 2 entgegen den ausdrücklichen Hinweisen in der Spezifikation des Tastschalters 1 gezogen würde, so dass der Abstand zwischen Tasthalter 10 und Gehäuseboden 13 künstlich verringert wird, was bei dem Vergleich 202 fälschlich als eine vermeintliche Abnahme der Ruhespannung U_{R} gedeutet würde. Eine solche Manipulation kann jedoch deswegen nicht zu substanziellen Problemen bei der Einstellung der Schaltschwelle führen, da im Betrieb des Tastsystems eine entsprechende Überprüfung und Anpassung der Schaltschwelle (um je einen Schritt, d.h. unter Addition eines Korrekturwertes) jeweils nur alle 5 Minuten durchgeführt wird. Das heißt, eine Manipulation am Taststift 2, sofern sie nicht über einen längeren Zeitraum von mehr als 5 Minuten aufrechterhalten wird, kann lediglich zu einer einmaligen Korrektur der Ausgangsspannung U_{SE} des Verstärkers 21 mit einem (entsprechend kleinen) Korrekturwert führen.

## Patentansprüche

1. Verfahren zur Einstellung einer Schaltschwelle (U_{S}) eines Tastschalters (1), der ein aus einer Ruheposition auslenkbares Tastelement (2) aufweist und der bei einer Auslenkung des Tastelementes (2) aus seiner Ruheposition eine von der Auslenkung abhängige Änderung eines Systemparameters (U_{SE}) bewirkt sowie ein Schaltsignal erzeugt, wenn der Wert des Systemparameters (U_{SE}) die Schaltschwelle (U_{S}) erreicht, bei dem die Differenz zwischen der Schaltschwelle (U_{S}) und dem als Ruhewert (U_{R}) definierten Wert des Systemparameters in der Ruheposition des Tastelementes (2) auf einen vorgebbaren Differenzwert (U_{D}) eingestellt wird,
**dadurch gekennzeichnet,**
**dass** die Differenz zwischen der Schaltschwelle (U_{S}) und dem Ruhewert (U_{R}) ausschließlich entlang einer Richtung eines Zahlenstrahles veränderbar ist und verändert wird, indem zu bestimmten, vorgebbaren Zeitpunkten bei Inbetriebnahme des Tastschalters (1) und/oder im Betrieb des Tastschalters (1) ein aktuell gemessener Wert des Systemparameter (U_{SE}) mit einem Soll-Ruhewert des Systemparameters verglichen wird und dass die Differenz zwischen der Schaltschwelle (U_{S}) und dem Ruhewert (U_{R}) des Systemparameters ausschließlich dann verändert wird, wenn der Wert des Systemparameters (U_{SE}) von dem Soll-Ruhewert entlang der Richtung des Zahlenstrahls abweicht, die entgegengesetzt zu der Richtung von dem Soll-Ruhewert zu der Schaltschwelle (U_{S}) gerichtet ist.

2. Verfahren nach Anspruch 1, **dadurch gekennzeichnet, dass** der Systemparameter durch ein elektrisches Ausgangssignal (U_{SE}) eines dem Tastelement (2) zugeordneten Sensors (9) gebildet wird.

3. Verfahren nach einem der vorhergehenden Ansprüche, **dadurch gekennzeichnet, dass** zur Energieversorgung des Tastschalters (1) eine Batterie dient und dass der Vergleich des gemessenen Wertes des Systemparameters mit dem Soll-Ruhewert nach jedem Batteriewechsel durchgeführt wird.

4. Verfahren nach einem der vorhergehenden Ansprüche, **dadurch gekennzeichnet, dass** der Vergleich und eine daran anschließende Änderung der Differenz zwischen Schaltschwelle (U_{S}) und Ruhewert (U_{R}) des Systemparameters solange wiederholt werden, bis der Wert des Systemparameters nicht mehr entlang der besagten Richtung des Zahlenstrahles von dem Soll-Ruhewert des Systemparameters abweicht.

5. Verfahren nach einem der vorhergehenden Ansprüche, **dadurch gekennzeichnet, dass** der Vergleich zwischen einem gemessenen Wert des Systemparameters und dem Soll-Ruhewert in einem bestimmten, vorgegebenen Zeittakt erfolgt.

6. Verfahren nach Anspruch 5, **dadurch gekennzeichnet, dass** nach einer neuen Inbetriebnahme des Tastschalters (1), insbesondere nach einem Batteriewechsel, der Vergleich zwischen einem gemessenen Wert des Systemparameters und dem Soll-Ruhewert in einem ersten Zeittakt erfolgt und dass im Betrieb des Tastschalters (1) der Vergleich zwischen einem gemessenen Wert des Systemparameters und dem Soll-Ruhewert in einem zweiten Zeittakt erfolgt, wobei im Betrieb des Tastschalters (1) der zeitliche Abstand zwischen zwei aufeinanderfolgenden Vergleichen vergrößert wird, wenn als Folge eines Vergleiches zwischen einem gemessenen Wert des Systemparameters und dem Soll-Ruhewert die Differenz zwischen der Schaltschwelle (U_{S}) und dem Ruhewert (U_{R}) des Systemparameters geändert worden ist.

7. Verfahren nach einem der vorhergehenden Ansprüche, **dadurch gekennzeichnet, dass** die Änderung der Differenz zwischen Schaltschwelle (U_{S}) und Ruhewert (U_{R}) des Systemparameters durch entsprechende Änderung der Schaltschwelle (U_{S}) erfolgt.

8. Verfahren nach einem der Ansprüche 1 bis 5, **dadurch gekennzeichnet, dass** die Änderung der Differenz zwischen der Schaltschwelle (U_{S}) und dem Ruhewert (U_{R}) des Systemparameters durch Korrektur des Ruhewertes (U_{R}), insbesondere durch Überlagerung des Systemparameters mit einem Korrekturwert, erfolgt.

9. Verfahren nach einem der vorherigen Ansprüche, **dadurch gekennzeichnet, dass** die Differenz zwischen Schaltschwelle (U_{S}) und Ruhewert (U_{R}) des Systemparameters bei jeder Einstellung der Schaltschwelle in konstanten, vorgegebenen Schritten geändert wird.

10. Tastschalter, der ein aus einer Ruheposition auslenkbares Tastelement (2) aufweist und der bei einer Auslenkung des Tastelementes (2) aus seiner Ruheposition eine von der Auslenkung abhängige Änderung eines Systemparameters bewirkt sowie ein Schaltsignal erzeugt, wenn der Wert des Systemparameters die Schaltschwelle (U_{S})erreicht, und der eine Steuereinrichtung aufweist, mit der die Differenz zwischen der Schaltschwelle (U_{S}) und dem als Ruhewert (U_{R}) definierten Wert des Systemparameters in der Ruheposition des Tastelementes (2) auf einen vorgebbaren Differenzwert einstellbar ist,
**dadurch gekennzeichnet,**
**dass** die Steuereinrichtung derart eingerichtet ist, dass die Differenz zwischen der Schaltschwelle (U_{S}) und dem Ruhewert (U_{R}) ausschließlich entlang einer Richtung eines Zahlenstrahles veränderbar ist, so dass eine Korrektur der Differenz zwischen Schaltschwelle und Ruhewert des Systemparameters nur dann erfolgt, wenn der aktuell gemessene Wert des Systemparameters entlang einer Richtung von dem Soll-Ruhewert abweicht, die derjenigen Richtung entgegengesetzt ist, entlang derer sich der Systemparameter bei einer Auslenkung des Tastelementes verändert.

11. Tastschalter nach Anspruch 10, **dadurch gekennzeichnet, dass** die Steuereinrichtung ein Mikroprozessor ist.

## Claims

1. Method for adjusting a switching threshold (U_{S}) of a sensor switch (1), which has a sensing element (2) that can be deflected out of a resting position and which upon deflection of the sensing element (2) out of its resting position effects a change to a system parameter (U_{SE}) dependent on the deflection and also generates a switching signal when the value of the system parameter (U_{SE}) reaches the switching threshold (U_{S}), in which the difference between the switching threshold (U_{S}) and the value of the system parameter defined as resting value (U_{R}) in the resting position of the sensing element (2) is adjusted to a predefinable difference value (U_{D}),
**characterised in that**
the difference between the switching threshold (U_{S}) and the resting value (U_{R}) is changeable and changed only in a direction of a number scale by comparing, at specific predefinable points in time when the sensor switch (1) is set in operation and/or during operation of the sensor switch (1), a currently measured value of the system parameter (U_{SE}) with a desired resting value of the system parameter, and that the difference between the switching threshold (U_{S}) and the resting value (U_{R}) of the system parameter is only changed when the value of the system parameter (U_{SE}) differs from the desired resting value in the direction of the number scale, which is directed in the opposite direction to the direction from the desired resting value to the switching threshold (U_{S}).

2. Method according to claim 1, **characterised in that** the system parameter is formed by an electrical output signal (U_{SE}) of a sensor (9) associated with the sensing element (2).

3. Method according to one of the preceding claims, **characterised in that** a battery serves to supply energy to the sensor switch (1), and that the comparison of the measured value of the system parameter with the desired resting value is conducted after each battery change.

4. Method according to one of the preceding claims, **characterised in that** the comparison and the subsequent change of the difference between the switching threshold (U_{S}) and the resting value (U_{R}) of the system parameter are repeated until the value of the system parameter no longer differs from the desired resting value of the system parameter in the said direction of the number scale.

5. Method according to one of the preceding claims, **characterised in that** the comparison between a measured value of the system parameter and the desired resting value occurs in a specific predefined time cycle.

6. Method according to claim 5, **characterised in that** after the sensor switch (1) is set in operation again, in particular after a battery change, the comparison between a measured value of the system parameter and the desired resting value occurs in a first time cycle, and that during operation of the sensor switch (1), the comparison between a measured value of the system parameter and the desired resting value occurs in a second time cycle, wherein during operation of the sensor switch (1) the time interval between two consecutive comparisons is increased if the difference between the switching threshold (Uₛ) and the resting value (U_{R}) of the system parameter had been changed as a consequence of a comparison between a measured value of the system parameter and the desired resting value.

7. Method according to one of the preceding claims, **characterised in that** the change in the difference between the switching threshold (U_{S}) and the resting value (U_{R}) of the system parameter occurs through a corresponding change of the switching threshold (U_{S}).

8. Method according to one of claims 1 to 5, **characterised in that** the change in the difference between the switching threshold (U_{S}) and the resting value (U_{R}) of the system parameter occurs through correction of the resting value (U_{R}), in particular by superposition of the system parameter by a correction value.

9. Method according to one of the preceding claims, **characterised in that** the difference between the switching threshold (U_{S}) and the resting value (U_{R}) of the system parameter is changed with each adjustment of the switching threshold in constant predefined steps.

10. Sensor switch, which has a sensing element (2) that can be deflected out of a resting position and which upon deflection of the sensing element (2) out of its resting position effects a change to a system parameter dependent on the deflection and also generates a switching signal when the value of the system parameter reaches the switching threshold (U_{S}), and which has a control device, with which the difference between the switching threshold (U_{S}) and the value of the system parameter defined as resting value (U_{R}) in the resting position of the sensing element (2) is adjustable to a predefinable difference value,
**characterised in that**
the control device is arranged in such a way that the difference between the switching threshold (U_{S}) and the resting value (U_{R}) is changeable only in a direction of a number scale, so that a correction of the difference between the switching threshold and the resting value of the system parameter only occurs when the currently measured value of the system parameter differs from the desired resting value in a direction, which is opposed to the direction in which the system parameter changes in the case of a deflection of the sensing element.

11. Sensor switch according to claim 10, **characterised in that** the control device is a microprocessor.

## Revendications

1. Procédé pour régler le seuil de commutation (U_{S}) d'un palpeur commutateur (1) qui présente un élément palpeur (2) pouvant être dévié d'une position de repos et qui, en présence d'une déviation de l'élément palpeur (2) de sa position de repos, provoque une variation d'un paramètre du système (U_{SE}) dépendante de la déviation et produit un signal de commutation lorsque la valeur du paramètre du système (U_{SE}) atteint le seuil de commutation (Us), la différence entre le seuil de commutation (U_{S}) et la valeur du paramètre du système à la position de repos de l'élément palpeur (2) définie comme valeur de repos (U_{R}) étant réglée à une valeur de différence (U_{D}) prédéfinissable,
**caractérisé en ce que**
la différence entre le seuil de commutation (U_{S}) et la valeur de repos (U_{R}) peut être et est modifiée exclusivement dans un sens d'une règle en comparant à des instants donnés, prédéfinissables, lors de la mise en marche du palpeur commutateur (1) et/ou pendant le fonctionnement de celui-ci, une valeur actuelle mesurée du paramètre du système (U_{SE}) avec une valeur de repos de consigne dudit paramètre du système, et **en ce que** la différence entre le seuil de commutation (U_{S}) et la valeur de repos (U_{R}) du paramètre du système est modifiée exclusivement lorsque la valeur du paramètre du système (U_{SE}) s'écarte de la valeur de repos dans un sens de la règle qui est opposé à celui allant de la valeur de repos de consigne au seuil de commutation (U_{S}).

2. Procédé selon la revendication 1, **caractérisé en ce que** le paramètre du système est un signal électrique de sortie (U_{SE}) d'un capteur (9) associé à l'élément palpeur (2).

3. Procédé selon une des revendications précédentes, **caractérisé en ce qu'**une batterie est utilisée pour alimenter en énergie le palpeur commutateur (1) et **en ce que** la comparaison de la valeur mesurée du paramètre du système à la valeur de repos de consigne est effectuée après chaque changement de batterie.

4. Procédé selon une des revendications précédentes, **caractérisé en ce que** la comparaison et une modification en résultant de la différence entre le seuil de commutation (U_{S}) et la valeur de repos (U_{R}) du paramètre du système sont répétées jusqu'à ce que la valeur dudit paramètre ne s'écarte plus de sa valeur de repos de consigne selon le sens indiqué de la règle.

5. Procédé selon une des revendications précédentes, **caractérisé en ce que** la comparaison entre une valeur mesurée du paramètre du système et la valeur de repos de consigne s'effectue à un certain rythme, prédéfini.

6. Procédé selon la revendication 5, **caractérisé en ce qu'**après une nouvelle mise en marche du palpeur commutateur (1), notamment après un changement de batterie, la comparaison entre une valeur mesurée du paramètre du système et la valeur de repos de consigne a lieu selon un premier rythme et, que pendant le fonctionnement du palpeur commutateur (1) la comparaison entre le paramètre du système et la valeur de repos de consigne a lieu à un deuxième rythme, le temps entre deux comparaisons consécutives, pendant le fonctionnement du palpeur commutateur (1), étant augmenté si, à la suite d'une comparaison entre une valeur mesurée du paramètre du système et la valeur de repos de consigne, la différence entre le seuil de commutation (U_{S}) et la valeur de repos (U_{R}) du paramètre du système a été modifiée.

7. Procédé selon une des revendications précédentes, **caractérisé en ce que** la modification de la différence entre le seuil de commutation (U_{S}) et la valeur de repos (U_{R}) du paramètre du système s'effectue par une modification correspondante du seuil de commutation (Us).

8. Procédé selon une des revendications 1 à 5, **caractérisé en ce que** la modification de la différence entre le seuil de commutation (U_{S}) et la valeur de repos (U_{R}) du paramètre du système s'effectue en corrigeant la valeur de repos (U_{R}), notamment en appliquant au paramètre du système une valeur de correction.

9. Procédé selon une des revendications précédentes, **caractérisé en ce que** la différence entre le seuil de commutation (U_{S}) et la valeur de repos (U_{R}) du paramètre du système est modifiée à chaque réglage du seuil de commutation par des étapes constantes prédéfinies.

10. Palpeur de commutateur qui présente un élément palpeur (2), qui, en présence d'une déviation de l'élément palpeur (2) par rapport à sa position de repos, provoque une variation d'un paramètre du système (U_{S}) dépendante de ladite déviation et produit un signal de commutation lorsque la valeur du paramètre du système (U_{S}) atteint le seuil de commutation (U_{S}), et qui présente un dispositif de commande par lequel la différence entre le seuil de commutation (U_{S}) et la valeur du paramètre du système à la position de repos de l'élément palpeur (2), définie comme valeur de repos (U_{R}), peut être réglée à une valeur de différence (U_{D}) prédéfinissable,
**caractérisé en ce que**
le dispositif de commande est conçu de manière que la différence entre le seuil de commutation (U_{S}) et la valeur de repos (U_{R}) ne peut être modifiée que selon un sens d'une règle, de sorte qu'une correction de la différence entre le seuil de commutation et la valeur de repos du paramètre du système a lieu exclusivement lorsque la valeur actuellement mesurée du paramètre du système s'écarte de la valeur de repos de consigne selon le sens opposé à celui selon lequel le paramètre du système varie quand l'élément palpeur dévie.

11. Palpeur commutateur selon la revendication 10, **caractérisé en ce que** le dispositif de commande est un microprocesseur.
